Europäisches Patentamt

European Patent Office

Office européen des brevets

(11) Veröffentlichungsnummer : **0 066 866**
**B1**

(12) **EUROPÄISCHE PATENTSCHRIFT**

(45) Veröffentlichungstag der Patentschrift :
21.11.85

(21) Anmeldenummer : 82104927.7

(22) Anmeldetag : 04.06.82

(51) Int. Cl.⁴ : **H 02 K 7/02**, F 16 F 15/30,
H 02 K 37/00

(54) Dämpfungsmasse für Schrittschaltmotoren.

(30) Priorität : 04.06.81 DE 3122288

(43) Veröffentlichungstag der Anmeldung :
15.12.82 Patentblatt 82/50

(45) Bekanntmachung des Hinweises auf die Patenterteilung : 21.11.85 Patentblatt 85/47

(84) Benannte Vertragsstaaten :
CH DE FR GB IT LI

(56) Entgegenhaltungen :
DE-A- 1 488 654
DE-A- 1 538 962
FR-A- 2 203 211
FR-A- 2 315 187
FR-A- 2 452 639
GB-A-   637 652
GB-A-   827 078
US-A- 3 547 503
US-A- 3 937 536
US-A- 4 031 420

(73) Patentinhaber : SCHRIMO AG

CH-6300 Zug (CH)

(72) Erfinder : Hetzel, Max, Dipl.-Ing.
Engestrasse 23
CH-Bern (CH)

(74) Vertreter : Vogeser, Werner, Dipl.-Ing. et al
Patentanwälte Hansmann & Vogeser
Albert-Rosshaupter-Strasse 65
D-8000 München 70 (DE)

## Beschreibung

Die Erfindung betrifft eine Dämpfungsmasse entsprechend dem Oberbegriff des Anspruchs 1.

Es ist bekannt, daß bei Schrittschaltmotoren während des Betriebs mechanische und/oder elektrische Schwingungen in Form von Pendelbewegungen auftreten können, die sich den Schrittschaltbewegungen überlagern. Derartige Schwingungen können vor allem bei Betriebsfrequenzen von 200 Hz bis 2 kHz in Form von Resonanzen dazu führen, daß der Motor außer Tritt fällt und neu gestartet werden muß. Ein derartiger anormaler Zustand ist gleichzeitig mit hohen Laufgeräuschen verbunden, obwohl der Rotor stillsteht. Zu gedämpften Schwingbewegungen kommt es auch bei Anhalten des Motors. Solche Schwingbewegungen sind vor allem bei Werkzeugmaschinen von Nachteil, die genau definierte Schrittbewegungen der Werkzeuge erfordern.

Auch ist bekannt, zur Erfüllung dieser Erfordernisse eine Scheibe konzentrisch um die Welle eines Motors anzuordnen (DE-A-1 538 962), wobei die Scheibe eine im Verhältnis zu der erhaltenden Dämpfung große Massenträgheit hat und mit der Welle mittels einer Rollreibungskupplung verbunden ist. Dabei besteht die Rollreibungskupplung aus einem axial druckbeaufschlagten Kugellager, dessen Außenlaufring fest mit der Scheibe verbunden ist.

Der Erfindung liegt die Aufgabe zugrunde, eine Dämpfungsmasse zu schaffen, deren Trägheit beim Starten des Motors nur gering ist und die dennoch in der Lage ist, im Betriebsfrequenzbereich auftretende mechanische und/oder elektrische Schwingungen zu dämpfen.

Gelöst wird diese Aufgabe gemäß der Erfindung durch die im kennzeichnenden Teil des Anspruchs 1 angegebenen Merkmale.

Zweckmäßige Ausgestaltungen der Erfindung ergeben sich aus den abhängigen Ansprüchen.

Die Verwendung eines Käfigkugellagers in einem mit einer Schwingungsdämpfungsflüssigkeit gefüllten Gehäuse hat den Vorteil, daß beim Starten des Motors nur der drehfest auf der Motorachse sitzende Kugellager-Innenring und nur das leichte, dünnwandige Gehäuse beschleunigt werden muß. Die allmähliche Mitnahme des Außenringes erfolgt über die Dämpfungsflüssigkeit im Gehäuse. Bei auftretenden Schwingungen bewegt sich der Kugellager-Außenring infolge seiner Massenträgheit mit unterschiedlicher Geschwindigkeit gegenüber dem Gehäuse, den Kugeln und dem Innenring und damit bewirkt die Viskosität der Dämpfungsflüssigkeit infolge auch unterschiedlicher Geschwindigkeiten in dieser Flüssigkeit eine Dämpfung der Schwingung.

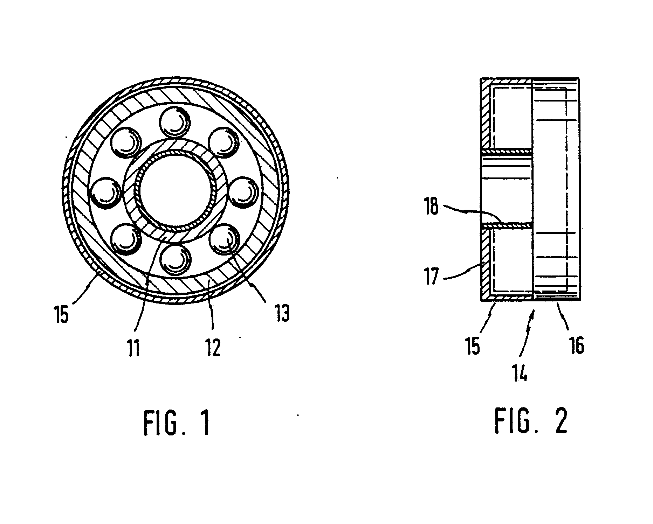

Die Erfindung wird nachstehend anhand der Fig. 1 und 2 beispielsweise erläutert. Es zeigt:

Figur 1 einen Querschnitt der Dämpfungsmasse und

Figur 2 teilweise im Schnitt eine Seitenansicht.

Die Dämpfungsmasse besteht aus einem Kugellager mit einem Innenring 11, einem Außenring 12 und zwischen diesen angeordneten Kugeln 13 sowie einem Gehäuse 14, das aus zwei Gehäusehälften 15 und 16 besteht und das mit einer Schwingungsdämpfungsflüssigkeit, zum Beispiel Öl, insbesondere Silikonöl, gefüllt ist.

Jede Gehäusehälfte hat einen nach innen ragenden Ringbund 18, der drehfest auf der nicht gezeigten Welle eines Schrittschaltmotors sitzt. Zwischen dem Außenring 12 des Kugellagers und der Gehäuseaußenwand sowie dem Gehäuseboden 17 ist ein Zwischenraum belassen, so daß der Kugellager-Außenring 12 frei drehbar ist. Die beiden Gehäusehälften 15 und 16 und deren jeweiliger Ringbund 18 sind flüssigkeitsdicht, zum Beispiel durch Kleben oder Schweißen, verbunden.

Beim Starten des Schrittschaltmotors wird zunächst nur der drehfest mit der Motorwelle verbundene Kugellager-Innenring 11 und das ebenfalls mit der Motorwelle über den Ringbund 18 einer jeden Gehäusehälfte drehfest verbundene Gehäuse gedreht. Die Mitnahme des Außenringes 12 erfolgt allmählich über die im Gehäuse befindliche Dämpfungsflüssigkeit. Bei Schwingungsbewegungen kommt die gesamte Masse des Kugellagers einschließlich des Gehäuses dämpfend zu Wirkung. Erst bei Schwingungsbewegungen treten große Geschwindigkeitsunterschiede in der Dämpfungsflüssigkeit auf, die dämpfend auf die Schwingungen wirkt.

## Patentansprüche

1. Dämpfungsmasse für Schrittschaltmotoren mit gleichmäßigem oder ungleichmäßigem Schaltschritt, die auf der Motorachse angeordnet ist, die ein Käfigkugellager umfaßt, dessen Innenring (11) drehfest auf der Motorachse sitzt und dessen Außenring (12) frei drehbar ist, dadurch gekennzeichnet, daß das Kugellager (11-13) in einem mit einer Schwingungsdämpfungsflüssigkeit gefüllten Gehäuse (14) angeordnet ist und daß allein der Außenring (12) und die Lagerkugeln (13) die relativ zur Motorachse bewegliche Dämpfungsmasse bilden.

2. Dämpfungsmasse nach Anspruch 1, dadurch gekennzeichnet, daß das Gehäuse (14) aus zwei abgedichtet verbundenen Hälften (15, 16) besteht.

3. Dämpfungsmasse nach Anspruch 1 und 2, dadurch gekennzeichnet, daß das Gehäuse (14) aus Kunststoff besteht.

4. Dämpfungsmasse nach Anspruch 2, dadurch gekennzeichnet, daß die Gehäusehälften (15, 16) je einen nach innen ragenden Ringbund (18) aufweisen, der drehfest auf der Motorachse und auf dem drehfest der Innenring (11) des Kugellagers sitzt.

5. Dämpfungsmasse nach einem der Ansprüche 1 bis 4, dadurch gekennzeichnet, daß die Dämpfungsflüssigkeit Öl, insbesondere Silikonöl, ist.

## Claims

1. Damping mass for stepping motors with regular or irregular steps, which is arranged on the motor shaft and includes a ball-and-cage bearing, the inner ring (11) of which is located non-rotatably on the motor shaft and the outer ring (12) of which is freely rotatable, characterised in that the ball bearing (11-13) is arranged in a housing (14) filled with a oscillation-damping fluid and that the outer ring (12) and the bearing balls (13) themselves form the damping mass movable relative to the motor shaft.

2. Damping mass according to claim 1, characterised in that the housing (14) comprises two sealingly-connected halves (15, 16).

3. Damping mass according to claim 1 and 2, characterised in that the housing (14) comprises plastics material.

4. Damping mass according to claim 2, characterised in that the housing halves (15, 16) each have an inwardly-projecting annular collar (18) which is located non-rotatably on the motor shaft and on which the inner ring (11) of the ball bearing is non-rotatably located.

5. Damping mass according to any of claims 1 to 4, characterised in that the damping fluid is oil, particularly silicone oil.

## Revendications

1. Masse d'amortissement, pour moteurs pas à pas comprenant un pas de commutation uniforme ou non uniforme, qui est disposée sur l'axe du moteur qui comprend un roulement à billes en cage dont la bague interne (11) repose, avec blocage en rotation, sur l'axe du moteur et dont la bague externe (12) peut tourner librement, caractérisée en ce que le roulement à billes (11-13) est disposé dans un boîtier (14) rempli d'un liquide d'amortissement des vibrations et en ce que seules la bague externe (12) et les billes du roulement (13) constituent la masse d'amortissement, mobile relativement à l'axe du moteur.

2. Masse d'amortissement selon la revendication 1, caractérisée en ce que le boîtier (14) est constitué par deux moitiés (15, 16) reliées de façon étanche.

3. Masse d'amortissement selon les revendications 1 et 2, caractérisée en ce que le boîtier (14) est constitué par de la matière plastique.

4. Masse d'amortissement selon la revendication 2, caractérisée en ce que les moitiés de boîtier (15, 16) présentent un collet annulaire respectif (18) en saillie vers l'intérieur, qui repose avec blocage en rotation sur l'axe du moteur et sur lequel la bague interne (11) du palier à roulement repose, avec blocage en rotation.

5. Masse d'amortissement selon l'une des revendications 1 à 4, caractérisée en ce que le liquide d'amortissement est de l'huile, en particulier de l'huile siliconée.

FIG. 1

FIG. 2